# EUROPEAN PATENT APPLICATION

(11) **EP 4 715 363 A1**
(43) Date of publication of application: **25.03.2026**
(21) Application number: 24807228.2
(22) Date of filing: 15.05.2024
(51) Int. Cl.: G01N 1/28

(54) **SAMPLE ENCAPSULATING METHOD AND SAMPLE ENCAPSULATING DEVICE**

(30) Priority: 18.05.2023 JP 2023081992; 14.05.2024 JP 2024078747
(71) Applicant: SCREEN Holdings Co., Ltd., Kyoto-shi, Kyoto 602-8585 (JP)
(72) Inventor: MORIWAKI, Sanzo, Kyoto-shi, Kyoto 602-8585 (JP); OGI, Hiroshi, Kyoto-shi, Kyoto 602-8585 (JP)
(74) Representative: Goddar, Heinz J.
(86) International application number: PCT/JP2024/017952
(87) International publication number: WO 2024/237277

(57) **Abstract**

A sample mounting and coverslipping method includes a step of preparing a slide and a coverslip, the slide having a sample attached thereon (step S11), a step of degassing a mounting medium to generate a degassed mounting medium (step S12), a step of applying the degassed mounting medium to the slide or the coverslip (step S13), and a step of mounting and coverslipping the sample by overlaying the coverslip on the slide via the degassed mounting medium (step S14). With this method, it is possible to reduce air bubbles between the slide and the coverslip.

## Description

### TECHNICAL FIELD

The present invention relates to a sample mounting and coverslipping method and a sample mounting and coverslipping device.

### CROSS-REFERENCE TO RELATED APPLICATIONS

This application claims priority benefit of Japanese Patent Application No. JP2023-081992 filed in the Japan Patent Office on May 18, 2023 and Japanese Patent Application No. JP2024-078747 filed in the Japan Patent Office on May 14, 2024, the entire disclosures of which are incorporated herein by reference.

### BACKGROUND ART

In recent year's research in medical or biological sciences, biological specimens such as tissue samples or cell samples are analyzed in units of a single cell for purposes such as the elucidation of mechanisms including disease mechanisms, biological mechanisms, and drug action mechanisms. In immunostaining analysis, for example, quantitative and/or qualitative analysis of biological substances such as proteins are/is conducted by staining the biological substances and measuring the staining intensity and localization of these substances. The immunostaining analysis is conducted using a preparation in which a stained sample attached on a slide is covered with a coverslip.

In the automated coverslipper disclosed in Japanese Patent Application Laid-Open No. 2019-219664 (Document 1), when the coverslip held under suction by the three suction cups is placed on the slide, the suction holding of the coverslip by the three suction cups is sequentially released such that one end portion of the coverslip is firstly placed on the slide and thereafter the remaining portion of the coverslip is placed on the slide. The automated cover slipper suppresses the generation of air bubbles between the slide and the coverslip by dispensing a coverslipping mounting medium from the fluid dispenser at a predetermined position on the slide and controlling the dispensing by the coverslip. The presence of air bubbles between the slide and the coverslip makes it difficult to observe and analyze an area of the sample that overlaps the air bubbles.

Meanwhile, in the aforementioned immunostaining analysis, there is demand for a further reduction of air bubbles between the slide and the coverslip in order to improve the accuracy of the analysis. In multiple immunostaining of a type that sequentially performs immunostaining multiple times on one sample, a relatively low-viscosity liquid such as water or phosphate-buffered saline (PBS) is used as a mounting medium because the coverslip is repeatedly placed on and removed from the sample attached on the slide. In the case where the positively charged coverslip is brought close to such a low-viscosity mounting medium, the mounting medium is quickly drawn to the coverslip and relatively easily creates the aforementioned air bubbles. In the aforementioned multiple immunostaining, the surface of the sample may become fluffed (i.e., coarse) due to reasons such as the removal of the coverslip. In this case, for example, when the mounting medium is applied onto the sample, gases tend to remain on the surface of the sample and relatively easily create air bubbles. Accordingly, there is especially demand for reducing air bubbles between the slide and the coverslip.

### SUMMARY OF THE INVENTION

The present invention is intended for a sample mounting and coverslipping method and a sample mounting and coverslipping device, and it is an object of the present invention to reduce air bubbles between a slide and a coverslip.

Aspect 1 of the present invention is a sample mounting and coverslipping method that includes a) preparing a slide and a coverslip, the slide having a sample attached thereon, b) degassing a mounting medium to generate a degassed mounting medium, c) applying the degassed mounting medium to the slide or the coverslip, and d) mounting and coverslipping the sample by overlaying the coverslip on the slide via the degassed mounting medium.

According to the present invention, it is possible to reduce air bubbles between the slide and the coverslip.

Aspect 2 of the present invention is the sample mounting and coverslipping method according to Aspect 1, in which the degassed mounting medium generated in the operation b) is maintained unexposed to outside air until before the operation c), the operations c) and d) are performed while the degassed mounting medium is exposed to outside air, and a time elapsed from when the degassed mounting medium is exposed to outside air to when the operation d) ends is within 60 seconds.

Aspect 3 of the present invention is the sample mounting and coverslipping method according to Aspect 1 (or according to Aspect 1 or 2), in which the degassing of the mounting medium in the operation b) is performed using a degassing membrane.

Aspect 4 of the present invention is the sample mounting and coverslipping method according to any one of Aspects 1 to 3, in which the sample is a sample observed by multiple immunostaining in which staining, observation, and color removal are repeated a plurality of times.

Aspect 5 of the present invention is a sample mounting and coverslipping device that includes a slide holder that holds a slide having a sample attached thereon, a coverslip holder that holds a coverslip, a mounting medium applicator that applies a degassed mounting medium to the slide or the coverslip, the degassed mounting medium being generated by degassing a mounting medium, and a glass shifter that shifts the coverslip holder relative to the slide holder to overlay the coverslip on the slide via the degassed mounting medium and to mount and coverslip the sample.

Aspect 6 of the present invention is the sample mounting and coverslipping device according to Aspect 5, in which the degassed mounting medium is maintained unexposed to outside air from when the degassed mounting medium is generated until before the degassed mounting medium is applied by the mounting medium applicator, the application of the degassed mounting medium by the mounting medium applicator and the mounting and coverslipping of the sample by the glass shifter are performed while the degassed mounting medium is exposed to outside air, and a time elapsed from when the degassed mounting medium is exposed to outside air to when the mounting and coverslipping of the sample by the glass shifter ends is within 60 seconds.

Aspect 7 of the present invention is a sample mounting and coverslipping device that includes a slide holder that holds a slide having a sample attached thereon, a coverslip holder that holds a coverslip that faces the slide with an interstice therebetween, and a mounting medium applicator that applies a degassed mounting medium to the interstice between the slide and the coverslip to fill the interstice with the degassed mounting medium, the degassed mounting medium being generated by degassing a mounting medium.

Aspect 8 of the present invention is the sample mounting and coverslipping device according to Aspect 7, in which the degassed mounting medium is maintained unexposed to outside air from when the degassed mounting medium is generated until before the degassed mounting medium is applied by the mounting medium applicator, the application of the degassed mounting medium by the mounting medium applicator is performed while the degassed mounting medium is exposed to outside air; and a time elapsed from when the degassed mounting medium is exposed to outside air to when the interstice is filled with the degassed mounting medium is within 60 seconds.

Aspect 9 of the present invention is the sample mounting and coverslipping device according to any one of Aspects 5 to 8 that further includes a mounting medium generator that degasses the mounting medium to generates the degassed mounting medium.

Aspect 10 of the present invention is the sample mounting and coverslipping device according to Aspect 9, in which the mounting medium generator includes a degassing membrane module in which the mounting medium flows through a degassing membrane provided in an internal space.

Aspect 11 of the present invention is the sample mounting and coverslipping device according to Aspect 10, in which the mounting medium generator further includes a circulator that supplies a liquid delivered from a delivery port of the degassing membrane module to a supply port of the degassing membrane module.

Aspect 12 of the present invention is the sample mounting and coverslipping device according to any one of Aspects 5 to 8 (or according to any one of Aspects 5 to 11), in which the sample is a sample observed by multiple immunostaining in which staining, observation, and color removal are repeated a plurality of times.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a diagram showing a configuration of a sample mounting and coverslipping device according to one embodiment.
Fig. 2 is a plan view of a preparation.
Fig. 3 is a side view of the preparation.
Fig. 4 is a flowchart of sample mounting and coverslipping.
Fig. 5 is a graph showing the relationship between the number of air bubbles and the elapsed time since a degassed mounting medium is exposed to the outside air.

### DESCRIPTION OF EMBODIMENTS

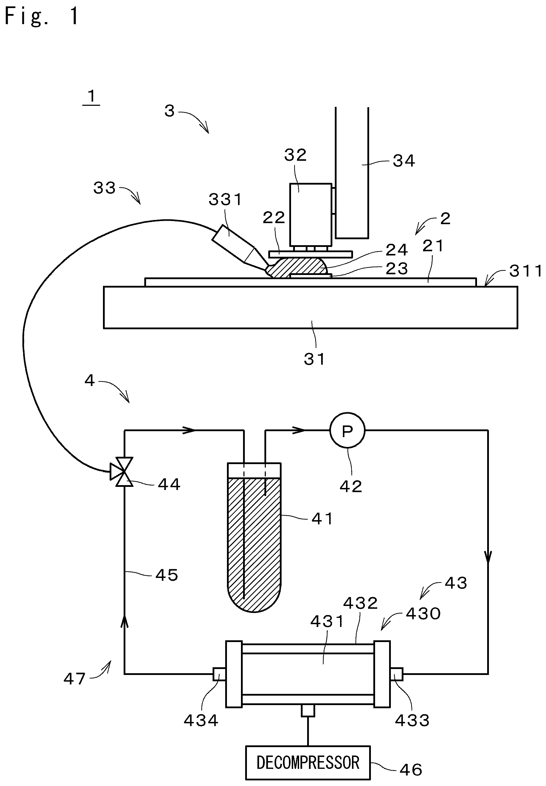

Fig. 1 is a diagram showing a configuration of a sample mounting and coverslipping device 1 according to one embodiment of the present invention. The sample mounting and coverslipping device 1 is used during creation of a preparation 2. The sample mounting and coverslipping device 1 includes a preparation creator 3 that creates the preparation 2, and a mounting medium generator 4 that generates a degassed mounting medium which will be described later. The preparation 2 is used for, for example, acquiring a stained image of a biological specimen by immunostaining.

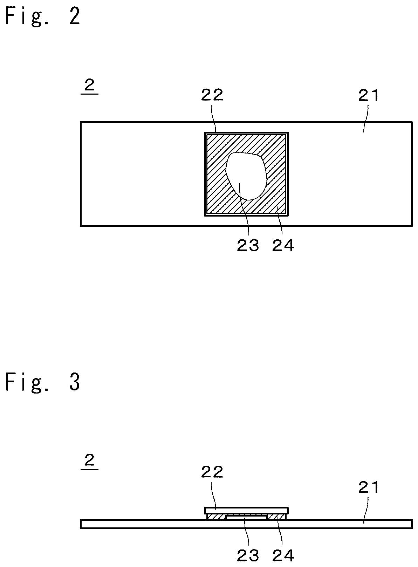

Fig. 2 is a plan view showing the preparation 2 created by the sample mounting and coverslipping device 1. Fig. 3 is a side view of the preparation 2. The preparation 2 includes a slide 21, a coverslip 22, a sample 23, and a degassed mounting medium 24. To facilitate understanding of the drawing, each consistent element of the preparation 2 in Fig. 3 is illustrated thicker than the actual size. In Figs. 2 and 3, the degassed mounting medium 24 is cross-hatched. The same also applies to Fig. 1.

The slide 21 is a slide for microscope and supports the sample 23 attached on the upper surface of the slide 21. The slide 21 is an approximately flat plate-like member made of glass or a resin. The slide 21 has, for example, an approximately rectangular shape in plan view. The coverslip 22 covers the sample 23 attached on the slide 21 from above. The coverslip 22 is an approximately flat plate-like member made of glass or a resin. The coverslip 22 has, for example, an approximately square or rectangular shape in plan view. The shapes of the slide 21 and the coverslip 22 in plan view may be changed to various shapes.

The sample 23 is a biological specimen such as a tissue section or a cell. For example, the sample 23 stained by immunostaining (also referred to as immunohistochemistry or immunocytochemistry) may be sandwiched between the slide 21 and the coverslip 22. For example, the sample 23 may be analyzed by sequential multiple immunostaining. Sequential multiple immunostaining refers to multiple immunostaining in which immunostaining, observation (e.g., image capture), and color removal of the sample 23 are repeated multiple times while changing an antibody or the like used in the immunostaining. In the sequential multiple immunostaining, the antibody may be inactivated and removed during color removal (i.e., pigment removal). In the sequential multiple immunostaining, since the covering of the sample 23 with the coverslip 22 and the removal of the coverslip 22 from the sample 23 are repeatedly performed, the surface of the sample 23 may become fluffed (i.e., may become coarse).

The degassed mounting medium 24 is a liquid generated by degassing a mounting medium (e.g., a commercial mounting medium) that is used during creation of a conventional preparation. The degassed mounting medium 24 is generated by, for example, degassing a mounting medium such as pure water or a commercial phosphate buffer (hereinafter, also referred to as "PBS") in the mounting medium generator 4 of the aforementioned sample mounting and coverslipping device 1. The aforementioned sequential multiple immunostaining uses a relatively low-viscosity mounting medium. In the preparation 2, the sample 23 is mounted and coverslipped between the slide 21 and the coverslip 22 by overlaying the coverslip 22 on the slide 21 via the degassed mounting medium 24 applied on the sample 23.

In the sample mounting and coverslipping device 1 shown in Fig. 1, the preparation creator 3 includes a slide holder 31, a coverslip holder 32, a mounting medium applicator 33, and a glass shifter 34. The slide holder 31 is a component that holds the slide 21 having the sample 23 attached on the upper surface. The slide holder 31 is, for example, a stage that detachably adsorbs and holds the lower surface of the slide 21 placed on an upper surface 311. The coverslip holder 32 is a component that holds the coverslip 22 above the slide holder 31. The coverslip holder 32 is, for example, an adsorption support that detachably adsorbs and holds the upper surface of the coverslip holder 32.

In the state shown in Fig. 1, the coverslip 22 held by the coverslip holder 32 is placed at a position spaced above from the slide 21 held by the slide holder 31. In other words, the coverslip 22 faces the slide 21 in the up-down direction with interstice therebetween. For example, the distance in the up-down direction between the upper surface of the slide 21 and the lower surface of the coverslip 22 (i.e., the height of the interstice between the slide 21 and the coverslip 22) is preferably less than or equal to 2 mm and more preferably less than or equal to 1 mm. The height of the interstice is also preferably greater than or equal to 0.5 mm.

The mounting medium applicator 33 is a component that applies the degassed mounting medium 24 generated by the mounting medium generator 4 to the slide 21 held by the slide holder 31 and/or the coverslip 22 held by the coverslip holder 32. The mounting medium applicator 33 includes, for example, a nozzle 331 that ejects the degassed mounting medium 24 from an ejection port provided at the tip, toward the interstice between the slide 21 and the coverslip 22. The degassed mounting medium 24 ejected from the nozzle 331 squeezes gases out of the interstice and fills the interstice.

The glass shifter 34 is a shifting mechanism for shifting the coverslip holder 32 in the up-down direction relative to the slide holder 31. In the example shown in Fig. 1, the glass shifter 34 shifts the coverslip holder 32 in the up-down direction. The glass shifter 34 includes, for example, an electric linear motor, an air cylinder, or a ball screw and an electrically rotating motor. In the preparation creator 3, the glass shifter 34 shifts the coverslip holder 32 downward from the state shown in Fig. 1. This causes the coverslip 22 to overlap the top of the slide 21 via the degassed mounting medium 24 and causes the sample 23 to be mounted and coverslipped between the slide 21 and the coverslip 22.

In the case where the aforementioned height of the interstice between the slide 21 and the coverslip 22 is relatively small, the glass shifter 34 may not perform the aforementioned relative shift of the coverslip holder 32. For example, the mounting and coverslipping of the sample 23 may be implemented by the mounting medium applicator 33 filling the aforementioned interstice with the degassed mounting medium 24 to overlay the coverslip 22 on the slide 21 via the degassed mounting medium 24. In this case, the glass shifter 34 may be omitted from the sample mounting and coverslipping device 1.

Alternatively, in the preparation creator 3, the mounting medium applicator 33 may apply the degassed mounting medium 24 to only the upper surface of the slide 21 while the slide 21 held by the slide holder 31 and the coverslip 22 held by the coverslip holder 32 are relatively largely spaced from each other in the up-down direction. As another alternative, the mounting medium applicator 33 may apply the degassed mounting medium 24 to only the upper surface of the coverslip 22 while the coverslip 22 is held upside down by the coverslip holder 32 that includes a mechanism for inverting the coverslip in the up-down direction. In this case, while being held upside down, the coverslip 22 with the degassed mounting medium 24 applied thereto is shifted downward in the up-down direction and overlaid on the slide 21. As yet another alternative, the degassed mounting medium 24 may be applied to only the upper surface of the coverslip 22 while the coverslip 22 is arranged and spaced below from the slide 21. In this case, for example, while the surface of the slide 21 having the sample 23 attached thereon faces downward (i.e., faces the coverslip 22 in the up-down direction), the slide 21 is shifted down toward the coverslip 22 and overlaid on the coverslip 22.

The mounting medium generator 4 includes a reservoir 41, a solution sender 42, a degasifier 43, a valve 44, and piping 45. The reservoir 41, the solution sender 42, the degasifier 43, and the valve 44 are connected to one another via the piping 45. In the mounting medium generator 4, the mounting medium sent out of the reservoir 41 by the solution sender 42 flows through the degasifier 43 and the valve 44 and returns to the reservoir 41 via the piping 45.

The reservoir 41 is a container that stores the mounting medium. The reservoir 41 has an internal space that is, for example, substantially unexposed to the outside air (e.g., air around the mounting medium generator 4). The reservoir 41 is, for example, a gastight enclosure that is sealed except for a joint with the piping 45. The mounting medium generator 4 may also use a plurality of containers connected by piping as the reservoir 41. In the mounting medium generator 4, the reservoir 41 is not limited to a gastight enclosure, and any container or the like having various structures is usable as the reservoir 41. For example, the upper portion of the reservoir 41 (i.e., a portion in which gases are stored) may be connected to piping of a first system and piping of a second system, the first system being a system for causing the outside air to flow in at a low flow rate via equipment such as a filter and a flow-rate control valve, the second system being a system connected to a pressure-reducing mechanism to generate a relatively low negative pressure in the upper portion of the reservoir 41. Alternatively, approximately the entire liquid level of the mounting medium stored in the reservoir 41 may be covered with a drop lid-like covering member that is floating on the liquid level, and the space of the reservoir 41 above the covering member may be connected to the outside air. In this case, the covering member is movable in the up-down direction along with the liquid level of the mounting medium. The piping through which the mounting medium is sent out of the reservoir 41 may be connected to, for example, the side surface of the lower portion of the reservoir 41. The solution sender 42 is a mechanism for sending out the mounting medium stored in the reservoir 41 toward the degasifier 43 via the piping 45. The solution sender 42 is, for example, a motorized pump. The solution sender 42 is not limited to a motorized pump, and may be any other mechanism.

The degasifier 43 is a component that degases a mounting medium to generate the degassed mounting medium 24. The degasifier 43 includes, for example, a degassing membrane module 430 that includes a degassing membrane 431 provided in the internal space of a housing 432. The degassing membrane 431 is, for example, a hollow fiber membrane. The housing 432 is, for example, an approximatively gastight enclosure having an approximately cylindrical shape. One longitudinal end of the housing 432 (the right end in the example shown in Fig. 1) is provided with a supply port 433 from which the mounting medium sent out of the reservoir 41 is supplied. The other longitudinal end of the housing 432 (the left end in the example shown in Fig. 1) is provided with a delivery port 434 from which the mounting medium that has flowed through the interior of the housing 432 is sent out.

The internal space of the housing 432 is connected to a decompressor 46 such as a vacuum pump via a joint different from the supply port 433 and the delivery port 434. When the decompressor 46 is driven, the pressure in the space around the degassing membrane 431 is reduced, and gases contained in the mounting medium flowing through the degassing membrane 431 (e.g., oxygen (O₂) that dissolves in the mounting medium from air) penetrate the degassing membrane 43 1 and flow into the space around the degassing membrane 431. Thus, the mounting medium that has flowed through the degassing membrane 431 turns into the degassed mounting medium 24 that is a mounting medium obtained by degassing.

The degassed mounting medium 24 generated by the degasifier 43 flows through the valve 44 via the delivery port 434 and the piping 45 and returns to the reservoir 41. The piping 45, the valve 44, the reservoir 41, and the solution sender 42 in the mounting medium generator 4 serve as a circulator 47 that supplies the liquid sent out from the delivery port 434 of the degassing membrane module 430 to the supply port 433 of the degassing membrane module 430. In this way, as a result of the circulation of the mounting medium through the reservoir 41, the solution sender 42, the degasifier 43, and the valve 44 via the piping 45, the mounting medium as a whole in the mounting medium generator 4 turns into the degassed mounting medium 24.

The valve 44 is, for example, a three-way valve. The valve 44 is arranged at the joint between the piping 45 of the mounting medium generator 4 and the mounting medium applicator 33 of the preparation creator 3. The piping 45 and the mounting medium applicator 33 are not connected to each other until the mounting medium in the mounting medium generator 4 turns into the degassed mounting medium 24, so that the mounting medium is circulated through the inside of the mounting medium generator 4 as described above. When the degassed mounting medium 24 is generated and supplied from the mounting medium applicator 33 to the slide 21 and the coverslip 22, the piping 45 of the mounting medium generator 4 and the mounting medium applicator 33 of the preparation creator 3 are connected to each other by the valve 44 so that part of the degassed mounting medium 24 flowing through the piping 45 is supplied into the mounting medium applicator 33.

In the mounting medium generator 4 shown in Fig. 1, the degassed mounting medium 24 is generated by a gastight circulation system that is substantially not open to the air, and the generated degassed mounting medium 24 is ejected from the mounting medium applicator 33 without substantially being exposed to the outside air. This prevents the outside air (e.g., oxygen in the air) from dissolving in the degassed mounting medium 24 before the degassed mounting medium 24 is supplied to the slide 21 and the coverslip 22. In the sample mounting and coverslipping device 1, for example, the concentration of dissolved oxygen in the degassed mounting medium 24 ejected from the nozzle 331 is preferably lower by 1 mg/L or more than the concentration of saturated dissolved oxygen in the above mounting medium at the temperature of the degassed mounting medium 24 to be ejected.

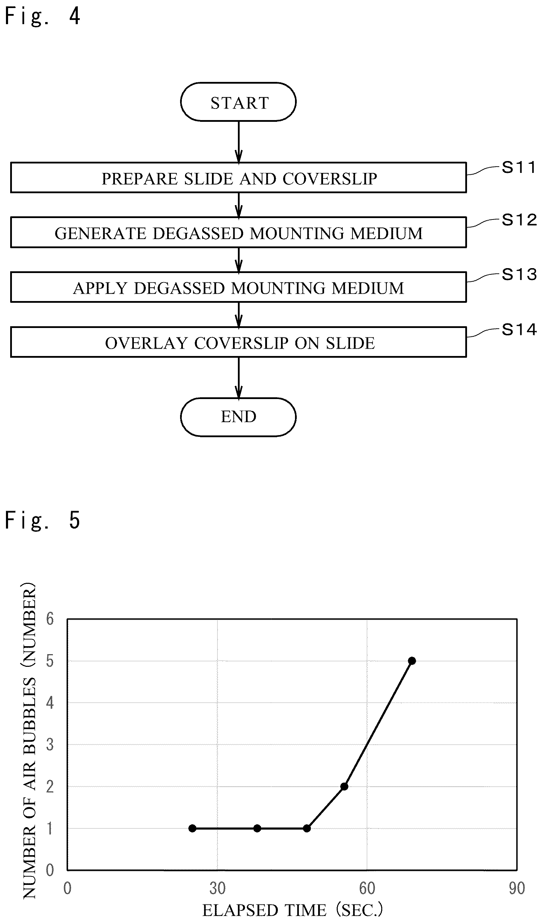

Next, one example of the procedure for creating the preparation 2 (i.e., the procedure for mounting and coverslipping the sample 23) will be described with reference to Fig. 4. First, the slide 21 with the sample 23 attached thereon is held and prepared by the slide holder 31 of the sample mounting and coverslipping device 1. The coverslip 22 is also held and prepared by the coverslip holder 32 (step S11). For example, the sample 23 attached on the slide 21 has been subjected to immunostaining as described above.

In the sample mounting and coverslipping device 1, in parallel with step S11, the mounting medium generator 4 degasses a mounting medium to generate the degassed mounting medium 24 (step S12). Note that step S12 may be performed in advance before step S11, or may be performed after step S11.

When steps S11 and S12 end, the degassed mounting medium 24 generated by the mounting medium generator 4 is applied to the slide 21 and the coverslip 22 by the mounting medium applicator 33 (step S13). Specifically, the degassed mounting medium 24 ejected from the mounting medium applicator 33 is supplied laterally to the interstice between the slide 21 and the coverslip 22 to fill the interstice. As described above, the degassed mounting medium 24 ejected from the mounting medium applicator 33 may be applied to at least one of the slide 21 and the coverslip 22.

When step S13 ends, the glass shifter 34 shifts the coverslip 22 downward. Then, the coverslip 22 is placed and overlaid on the sample 23 attached on the slide 21 via the degassed mounting medium 24 so that the sample 23 is mounted and coverslipped between the slide 21 and the coverslip 22. In this way, the preparation 2 is created (step S14). As described above, in the case where the aforementioned height of the interstice between the slide 21 and the coverslip 22 is relatively small, the shift of the coverslip 22 by the glass shifter 34 may be omitted from step S14.

In this way, the preparation 2 is created using the degassed mounting medium 24. This reduces the possibility that gases (e.g., oxygen) that dissolve in the degassed mounting medium 24 will separate out and generate air bubbles under the influence of the reduced pressure or the like in the degassed mounting medium 24 between the slide 21 and the coverslip 22. It also reduces the possibility that fine air bubbles contained in the degassed mounting medium 24 will be spread out by the sample 23 and the coverslip 22. Moreover, even if air bubbles are generated between the slide 21 and the coverslip 22, these air bubbles will dissolve and disappear in the degassed mounting medium 24 that has a low concentration of dissolved gas. Even in the case where air bubbles are generated as a result of the surrounding atmosphere becoming entangled during the placement of the coverslip 22 on the slide 21, these air bubbles will dissolve and disappear in the degassed mounting medium 24. This reduces air bubbles between the slide 21 and the coverslip 22. As a result, it is possible to prevent the sample 23 and air bubbles from overlapping in plan view and to improve the accuracy of analysis of the sample 23 using the preparation 2.

The aforementioned creation of the preparation 2 (i.e., the mounting and coverslipping of the sample 23) does not necessarily have to be carried out by the sample mounting and coverslipping device 1, and may be implemented in any of various modes. For example, the preparation of the slide 21 and the coverslip 22 in step S11, the application of the degassed mounting medium 24 in step S13, and the placement of the coverslip 22 on the slide 21 in step S14 may be carried out manually by an operator.

The generation of the degassed mounting medium 24 in step S12 may be carried out by, for example, agitating a commercial mounting medium stored in an open-ended container such as a beaker with use of a stirrer or any other device arranged in a vacuum chamber. Alternatively, the degassed mounting medium 24 may be generated by the application of ultrasound to a commercial mounting medium or by heating and subsequent cooling of a commercial mounting medium. The generated degassed mounting medium 24 is preferably stored while being unexposed to the outside air. For example, the degassed mounting medium 24 may be stored in a gastight enclosure in which gases such as air do not exist substantially. Alternatively, in the case where the degassed mounting medium 24 is stored in a container that is open to the air, the degassed mounting medium 24 that is located in an area at a depth of 30 mm or more from the liquid level may be used as the degassed mounting medium 24 that is substantially unexposed to the outside air.

As described above, in the case where the application of the degassed mounting medium 24 (step S13) is carried out manually by an operator, for example, the degassed mounting medium 24 generated in advance in step S12 and stored while being unexposed to the outside air may be sponged up by, for example, a pipet or a dropper and dropped and applied onto the slide 21 (step S13). Then, the operator mounts and coverslips the sample 23 by holding the coverslip 22 with tweezers or the like and overlaying the coverslip 22 on the degassed mounting medium 24 applied on the slide 21 (step S14). At this time, if a long time elapses from when the degassed mounting medium 24 is dropped on the slide 21 and exposed to the outside air to when the mounting and coverslipping of the sample 23 by the coverslip 22 ends, the outside air may dissolve in the degassed mounting medium 24 (e.g., oxygen in the air may dissolve), and air bubbles may be generated between the slide 21 and the coverslip 22.

Fig. 5 is a graph showing the relationship between the elapsed time since the degassed mounting medium 24 is exposed to the outside air (i.e., the time of contact with the air) and the number of air bubbles remaining on the sample 23 between the slide 21 and the coverslip 22. In Fig. 5, the horizontal axis indicates the elapsed time, and the vertical axis indicates the number of air bubbles. The elapsed time is the time elapsed from when the degassed mounting medium 24 unexposed to the outside air is dropped on the slide 21 to when the degassed mounting medium 24 is covered with the coverslip 22. The degassed mounting medium 24 is generated by degassing pure water. The sample 23 has an area of approximately 450 mm² in plan view.

As shown in Fig. 5, from the viewpoint of suppressing the aforementioned number of air bubbles to three or less, the time elapsed from when the degassed mounting medium 24 is exposed to the outside air to when step S14 ends is preferably 60 seconds or less. From the viewpoint of suppressing the number of air bubbles to one or less, the elapsed time is preferably 50 seconds or less and more preferably 48 seconds or less. In the case where the preparation 2 is created using pure water that is not degassed, even if the aforementioned elapsed time is approximately 25 seconds, the aforementioned number of air bubbles is eight, and the sizes of these air bubbles are greater than in the case of using the degassed mounting medium 24.

As described above, the aforementioned sample mounting and coverslipping method includes the step of preparing the slide 21 and the coverslip 22, the slide 21 having the sample 23 attached thereon (step S11), the step of degassing a mounting medium to generate the degassed mounting medium 24 (step S12), the step of applying the degassed mounting medium 24 to the slide 21 or the coverslip 22 (step S13), and the step of mounting and coverslipping the sample 23 by overlaying the coverslip 22 on the slide 21 via the degassed mounting medium 24 (step S14). This reduces air bubbles between the slide 21 and the coverslip 22. As a result, it is possible to prevent the sample 23 and air bubbles from overlapping in plan view and to improve the accuracy of analysis of the sample 23 using the preparation 2.

As described above, the degassed mounting medium 24 generated in step S12 is preferably maintained unexposed to the outside air until before step S13. This prevents the outside air from dissolving in the degassed mounting medium 24 before use. As a result, it is possible to further reduce air bubbles between the slide 21 and the coverslip 22. Steps S13 and S14 are performed while the degassed mounting medium 24 is exposed to the outside air, and the time elapsed from when the degassed mounting medium 24 is exposed to the outside air to when step S14 ends is preferably within 60 seconds. This further reduces air bubbles between the slide 21 and the coverslip 22 as described above.

As described above, the degassing of the mounting medium in step S12 is preferably performed using the degassing membrane 431. This allows the degassing of the mounting medium to be favorably carried out with a simple structure.

As described above, the sample 23 is preferably a sample observed by multiple immunostaining (so-called sequential multiple immunostaining) in which staining,observation, and color removal are repeated multiple times. The sample 23 used in the sequential multiple immunostaining may have a fluffed surface due to repeated removal of the coverslip 22 or other reasons. In this case, gases are likely to remain on the surface, resulting in the generation of air bubbles. Therefore, the sample mounting and coverslipping method using the aforementioned degassed mounting medium 24, which is capable of reducing air bubbles between the slide 21 and the coverslip 22, is in particular suitable for the mounting and coverslipping of the sample 23 used in the sequential multiple immunostaining.

The aforementioned sample mounting and coverslipping device 1 includes the slide holder 31, the coverslip holder 32, the mounting medium applicator 33, and the glass shifter 34. The slide holder 31 holds the slide 21 having the sample 23 attached thereon. The coverslip holder 32 holds the coverslip 22. The mounting medium applicator 33 applies the degassed mounting medium 24 generated by degassing a mounting medium to the slide 21 or the coverslip 22. The glass shifter 34 shifts the coverslip holder 32 relative to the slide holder 31 to overlay the coverslip 22 on the slide 21 via the degassed mounting medium 24 and to mount and coverslip the sample 23. This reduces air bubbles between the slide 21 and the coverslip 22 as described above.

As described above, the degassed mounting medium 24 is preferably maintained unexposed to the outside air from when the degassed mounting medium 24 is generated until when the degassed mounting medium 24 is applied by the mounting medium applicator 33. This prevents the outside air from dissolving in the degassed mounting medium 24 before use as described above. The application of the degassed mounting medium 24 by the mounting medium applicator 33 and the mounting and coverslipping of the sample 23 by the glass shifter 34 are carried out while the degassed mounting medium 24 is exposed to the outside air, and the time elapsed from when the degassed mounting medium 24 is exposed to the outside air to when the mounting and coverslipping of the sample 23 by the glass shifter 34 ends is preferably within 60 seconds. This further reduces air bubbles between the slide 21 and the coverslip 22 as described above.

As described above, the glass shifter 34 may be omitted from the sample mounting and coverslipping device 1. In this case, the sample mounting and coverslipping device 1 includes the slide holder 31, the coverslip holder 32, and the mounting medium applicator 33. The slide holder 31 holds the slide 21 having the sample 23 attached thereon. The coverslip holder 32 holds the coverslip 22 that faces the slide 21 with interstice therebetween. The mounting medium applicator 33 applies the degassed mounting medium 24 generated by degassing a mounting medium to the interstice between the slide 21 and the coverslip 22 to fill the above interstice with the degassed mounting medium 24. This enables the application of the degassed mounting medium 24 to the slide 21 and the coverslip 22 while suppressing the exposure of the degassed mounting medium 24 to the outside air. As a result, as described above, it is possible to reduce air bubbles between the slide 21 and the coverslip 22. Note that in the sample mounting and coverslipping device 1, the application of the degassed mounting medium 24 to the interstice may be facilitated by maintaining the interstice in a vacuum.

As described above, the degassed mounting medium 24 is preferably maintained unexposed to the outside air from when the degassed mounting medium 24 is generated until when the degassed mounting medium 24 is applied by the mounting medium applicator 33. This prevents the outside air from dissolving in the degassed mounting medium 24 before use as described above. The application of the degassed mounting medium 24 by the mounting medium applicator 33 is carried out while the degassed mounting medium 24 is exposed to the outside air, and the time elapsed from when the degassed mounting medium 24 is exposed to the outside air to when the degassed mounting medium 24 fills the aforementioned interstice is preferably within 60 seconds. This further reduces air bubbles between the slide 21 and the coverslip 22 as described above.

As described above, the sample mounting and coverslipping device 1 preferably further includes the mounting medium generator 4 that degasses a mounting medium to generate the degassed mounting medium 24. Accordingly, the generation of the degassed mounting medium 24 and the mounting and coverslipping of the sample 23 is implemented by a single device.

As described above, the mounting medium generator 4 preferably includes the degassing membrane module 430 in which the mounting medium flows through the degassing membrane 431 provided in the internal space. Accordingly, the generation of the degassed mounting medium 24 is realized by a simple structure.

As described above, the mounting medium generator 4 preferably further includes the circulator 47 that supplies the liquid sent out from the delivery port 434 of the degassing membrane module 430 to the supply port 433 of the degassing membrane module 430. Accordingly, the degassing of the mounting medium is carried out favorably.

As described above, the sample 23 is preferably a sample observed by multiple immunostaining (so-called sequential multiple immunostaining) in which staining,observation, and color removal are repeated multiple times. As described above, the sample mounting and coverslipping device 1 is capable of reducing air bubbles between the slide 21 and the coverslip 22 and is thus in particular suitable for the mounting and coverslipping of the sample 23 used in the sequential multiple immunostaining.

The sample mounting and coverslipping device 1 and the sample mounting and coverslipping method described above may be modified in various ways.

The sample mounting and coverslipping device 1 does not necessarily have to include the circulator 47, and may use, as the degassed mounting medium 24, a mounting medium that is degassed only once in the degasifier 43.

The sample mounting and coverslipping device 1 does not necessary have to include the mounting medium generator 4, and the mounting medium generator may be omitted. In this case, the degassed mounting medium 24 is generated outside the sample mounting and coverslipping device 1 and applied to the slide 21 or the coverslip 22 inside the sample mounting and coverslipping device 1.

In the sample mounting and coverslipping device 1, the coverslip holder 32 may be fixed unmovably, and the glass shifter 34 may shift the slide holder 31 in the up-down direction. Alternatively, the glass shifter 34 may shift both of the slide holder 31 and the coverslip holder 32.

The time elapsed from when the degassed mounting medium 24 is exposed to the outside air to when the mounting and coverslipping of the sample 23 ends does not necessarily have to be less than or equal to 60 seconds, and may exceeds 60 seconds.

The sample 23 does not necessarily have to be observed by the sequential multiple immunostaining, and also does not necessarily have to be a biological specimen. The sample 23 may be any of various samples used for various purposes.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: sample mounting and coverslipping device
- 4: mounting medium generator
- 21: slide
- 22: coverslip
- 23: sample
- 24: degassed mounting medium
- 31: slide holder
- 32: coverslip holder
- 33: mounting medium applicator
- 34: glass shifter
- 47: circulator
- 331: nozzle
- 430: degassing membrane module
- 431: degassing membrane
- 433: supply port
- 434: delivery port
- S11 to S14: step

## Claims

1. A sample mounting and coverslipping method comprising:
a) preparing a slide and a coverslip, the slide having a sample attached thereon;
b) degassing a mounting medium to generate a degassed mounting medium;
c) applying said degassed mounting medium to said slide or said coverslip; and
d) mounting and coverslipping said sample by overlaying said coverslip on said slide via said degassed mounting medium.

2. The sample mounting and coverslipping method according to claim 1, wherein
said degassed mounting medium generated in said operation b) is maintained unexposed to outside air until before said operation c),
said operations c) and d) are performed while said degassed mounting medium is exposed to outside air, and
a time elapsed from when said degassed mounting medium is exposed to outside air to when said operation d) ends is within 60 seconds.

3. The sample mounting and coverslipping method according to claim 1, wherein
the degassing of said mounting medium in said operation b) is performed using a degassing membrane.

4. The sample mounting and coverslipping method according to any one of claims 1 to 3, wherein
said sample is a sample observed by multiple immunostaining in which staining, observation, and color removal are repeated a plurality of times.

5. A sample mounting and coverslipping device comprising:
a slide holder that holds a slide having a sample attached thereon;
a coverslip holder that holds a coverslip;
a mounting medium applicator that applies a degassed mounting medium to said slide or said coverslip, the degassed mounting medium being generated by degassing a mounting medium; and
a glass shifter that shifts said coverslip holder relative to said slide holder to overlay said coverslip on said slide via said degassed mounting medium and to coverslip said sample.

6. The sample mounting and coverslipping device according to claim 5, wherein
said degassed mounting medium is maintained unexposed to outside air from when said degassed mounting medium is generated until before said degassed mounting medium is applied by said mounting medium applicator,
the application of said degassed mounting medium by said mounting medium applicator and the mounting and coverslipping of said sample by said glass shifter are performed while said degassed mounting medium is exposed to outside air, and
a time elapsed from when said degassed mounting medium is exposed to outside air to when the mounting and coverslipping of said sample by said glass shifter ends is within 60 seconds.

7. A sample mounting and coverslipping device comprising:
a slide holder that holds a slide having a sample attached thereon;
a coverslip holder that holds a coverslip that faces said slide with an interstice therebetween; and
a mounting medium applicator that applies a degassed mounting medium to the interstice between said slide and said coverslip to fill said interstice with said degassed mounting medium, the degassed mounting medium being generated by degassing a mounting medium.

8. The sample mounting and coverslipping device according to claim 7, wherein
said degassed mounting medium is maintained unexposed to outside air from when said degassed mounting medium is generated until before said degassed mounting medium is applied by said mounting medium applicator,
the application of said degassed mounting medium by said mounting medium applicator is performed while said degassed mounting medium is exposed to outside air; and
a time elapsed from when said degassed mounting medium is exposed to outside air to when said interstice is filled with said degassed mounting medium is within 60 seconds.

9. The sample mounting and coverslipping device according to any one of claims 5 to 8, further comprising:
a mounting medium generator that degasses said mounting medium to generate said degassed mounting medium.

10. The sample mounting and coverslipping device according to claim 9, wherein
said mounting medium generator includes a degassing membrane module in which said mounting medium flows through a degassing membrane provided in an internal space.

11. The sample mounting and coverslipping device according to claim 10, wherein
said mounting medium generator further includes a circulator that supplies a liquid delivered from a delivery port of said degassing membrane module to a supply port of said degassing membrane module.

12. The sample mounting and coverslipping device according to any one of claims 5 to 8, wherein
said sample is a sample observed by multiple immunostaining in which staining, observation, and color removal are repeated a plurality of times.
